# EUROPEAN PATENT APPLICATION

(11) **EP 1 528 276 A2**
(43) Date of publication of application: **04.05.2005**
(21) Application number: 04024965.8
(22) Date of filing: 20.10.2004
(51) Int. Cl.: F16D 27/115

(54) **Installation structure of electromagnetic multiple-disk clutch device**

(30) Priority: 28.10.2003 JP 2003367030
(71) Applicant: JATCO Ltd, Fuji-shi, Shizuoka 417-8585 (JP)
(72) Inventor: Iizuka, Kouichi, Fuji-shi Shizuoka 417-8585 (JP); Katou, Yoshiaki, Fuji-shi Shizuoka 417-8585 (JP); Yamazaki, Nobushi, Tochigi-shi, Tochigi 328-8502 (JP); Hoshinoya, Takeshi, Tochigi-shi, Tochigi 328-8502 (JP)
(74) Representative: Grünecker, Kinkeldey, Stockmair & Schwanhäusser Anwaltssozietät

(57) **Abstract**

An installation structure of an electromagnetic multiple-disk clutch device (5) having an electromagnet (16a) and a multiple-disk clutch pack (12) having drive and driven plates and arranged radially outside of the electromagnet (16a), includes a stationary housing portion (4) accommodating therein the electromagnetic multiple-disk clutch device (5). An engaging member (160;20) is attached to an electromagnet-coil casing of the electromagnet, and extends radially outwards from the electromagnet-coil casing. A radial length of the engaging member (160;20) is dimensioned so that the outermost end of the engaging member is laid outside of the outermost portion of the multiple-disk clutch pack (12). Also provided is an engaging-member retainer (4b;19) formed in the stationary housing portion and brought into engagement with the engaging member when assembling the electromagnetic multiple-disk clutch device, for preventing rotary motion of the electromagnet and for positioning the electromagnet (16a) with respect to the stationary housing portion (4).

## Description

### TECHNICAL FIELD

The present invention relates to an installation structure of an electromagnetic multiple-disk clutch device serving as a power transmission element capable of coupling and decoupling an engine crankshaft to and from a speed-change gear mechanism of an automatic transmission, and specifically to the improvement of an installation structure regarding positioning and rotary-motion prevention of an electromagnet of an electromagnetic multiple-disk clutch device having drive and driven plates arranged radially outside of the electromagnet.

### BACKGROUND ART

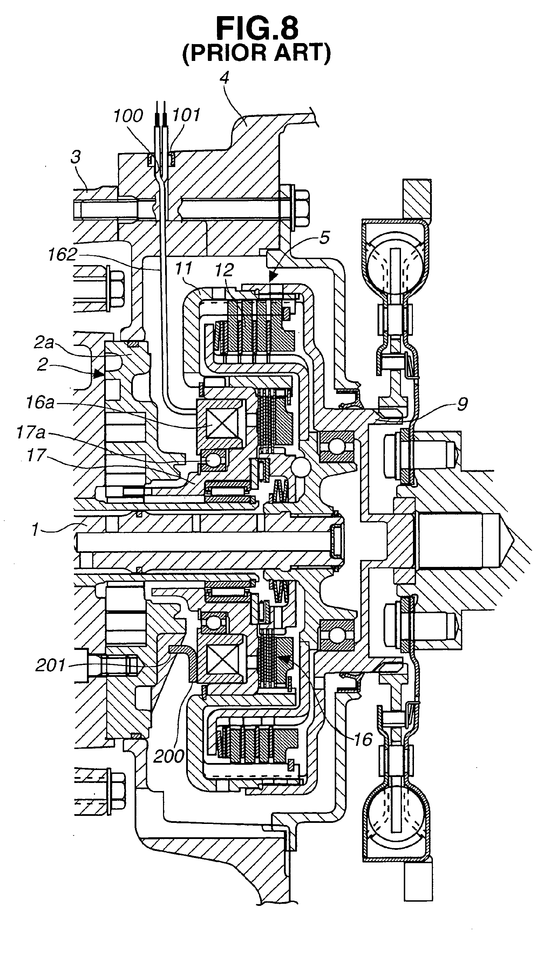

In recent years, there have been proposed and developed various electromagnetically-operated multiple-disk clutch devices each having drive and driven plates arranged radially outside of an electromagnet used for clutch engagement/disengagement. One such electromagnetic multiple-disk clutch device has been disclosed in Japanese Patent Provisional Publication No. 2003-74600 (hereinafter is referred to as "JP2003-74600"), corresponding to European Patent Application No. 1 291 540. Fig. 8 shows an electromagnetic multiple-disk clutch device 5 as disclosed in JP2003-74600. Electromagnetic clutch device 5 shown in Fig. 8 is comprised of an electromagnetic pilot clutch 16 having an electromagnet 16a and a first alternating series of drive and driven plates, and a main multiple-disk clutch pack 12 provided radially outside of electromagnet 16a of electromagnetic pilot clutch 16 and having a second alternating series of drive and driven plates placed between first and second input clutch drums 9 and 11 spline-connected to each other. As shown in Fig. 8, clutch device 5 is mounted on and spline-connected at its inner periphery to external splines of the protruded end of a transmission input shaft 1. Electromagnet (electromagnet-coil) 16a, which has to serve as a stationary part, is located adjacent to an electromagnetic-clutch rotor 17 serving as a rotatable member. The performance of the electromagnet-coil, such as magnetic flux density and magnetizing force, tends to be greatly affected by a thermal factor such as frictional heat created by friction between the rotary member (rotor 17) and the stationary member (electromagnet 16a). Thus, a bearing 17a is interleaved between the electromagnet-coil casing and the rotor to suppress or reduce undesirable friction. In order to position electromagnet 16a with respect to a stationary housing portion (concretely, a pump housing 2a of an oil pump 2 disposed between a transmission casing 3 and a converter housing 4) of a speed-change gear mechanism of an automatic transmission, and to prevent rotary motion of electromagnet 16a, a rotary-motion prevention member 200 and a rotary-motion prevention groove 201 are provided. Rotary-motion prevention member 200 is fixedly connected to the electromagnet-coil casing of electromagnet 16a, whereas rotary-motion prevention groove 201 is formed in pump housing 2a. Actually, positioning and rotary-motion prevention of electromagnet 16a are attained by engaging rotary-motion prevention member 200 with rotary-motion prevention groove 201, when assembling clutch device 5 onto the front end of the speed-change gear mechanism. Also provided is an electromagnet wiring-harness takeout hole 100 for a flexible wiring harness 162 of electromagnet 16a. Wiring-harness takeout hole 100 is often formed in converter housing 4 (or in transmission casing 3). An oil seal 101 is provided to ensure tight seal between the outer periphery of wiring harness 162 and the inner periphery of wiring-harness takeout hole 100 and thus to prevent oil leakage. A part of wiring harness 162 of electromagnet 16a, extending from the electromagnet-coil casing to the inner peripheral wall of converter housing 4, is not retained, but freely wired within the internal space of converter housing 4.

### SUMMARY OF THE INVENTION

However, in case of the installation structure of the electromagnetic multiple-disk clutch device disclosed in JP2003-74600, there are the following drawbacks.

First, the installation structure of the clutch device disclosed in JP2003-74600 has the difficulty of positioning the electromagnet with respect to the pump housing of the front end of the speed-change gear mechanism, when mounting and assembling the clutch device on the speed-change gear mechanism. That is to say, when circumferentially positioning the rotary-motion prevention member with respect to the rotary-motion prevention groove, it is difficult to easily position the rotary-motion prevention member with respect to the rotary-motion prevention groove by way of visual observation. This is because the rotary-motion prevention member is arranged radially inside of the outermost portion of the clutch device and thus it is impossible to check up on angular phase matching (or radial alignment) between the rotary-motion prevention member and the rotary-motion prevention groove by way of visual observation.

Second, owing to the ease of relative rotation of the electromagnet installed on the electromagnetic-clutch rotor via the bearing, the installation structure of the clutch device disclosed in JP2003-74600 has the difficulty of assembling and installing the electromagnet onto the front end of the speed-change gear mechanism, while taking into account both of angular phase matching between the rotary-motion prevention member and the rotary-motion prevention groove and spline-connection between external splines of the protruded end of the transmission input shaft and internal splines of a clutch-hub spline portion of the clutch device.

Third, in the installation structure of the clutch device disclosed in JP2003-74600, there is no wiring-harness protecting/retaining member within an internal space of the converter housing or the transmission casing, and thus the material and shape of lead wires of the wiring harness must be adequately taken into account so as to avoid undesirable contact between the wiring harness and the second input clutch drum. Also, the installation structure of the clutch device disclosed in JP2003-74600 requires an additional machining process of the electromagnet wiring-harness takeout hole and an additional oil seal used to prevent oil leakage from the electromagnet wiring-harness takeout hole to the exterior space, in other words, increased machining portions and increased number of component parts.

Accordingly, it is an object of the invention to provide an installation structure of an electromagnetic multiple-disk clutch device, capable of ensuring simplicity and high accuracy in installation/positioning of an electromagnet of the clutch device with respect to a stationary housing portion of a speed-change gear mechanism of an automatic transmission, and certainly preventing rotary motion of the electromagnet.

In order to accomplish the aforementioned and other objects of the present invention, an installation structure of an electromagnetic multiple-disk clutch device having an electromagnet and a multiple-disk clutch pack having drive and driven plates and arranged radially outside of the electromagnet, the structure comprises a stationary housing portion accommodating therein the electromagnetic multiple-disk clutch device, an engaging member attached to an electromagnet-coil casing of the electromagnet and extending radially outwards from the electromagnet-coil casing and having a radial length that an outermost end of the engaging member is laid outside of an outermost portion of the multiple-disk clutch pack, and an engaging-member retainer formed in the stationary housing portion and brought into engagement with the engaging member when assembling the electromagnetic multiple-disk clutch device, for preventing rotary motion of the electromagnet and for positioning the electromagnet with respect to the stationary housing portion.

The other objects and features of this invention will become understood from the following description with reference to the accompanying drawings.

### BRIEF DESCRIPTION OF THE DRAWINGS

Fig. 1 is a longitudinal cross-sectional view illustrating an embodiment of an installation structure of an electromagnetic multiple-disk clutch device and also showing component parts located around the electromagnetic multiple-disk clutch device of the embodiment.
Fig. 2 is a front view of the electromagnetic multiple-disk clutch device and component parts located around the electromagnetic multiple-disk clutch device of the embodiment of Fig. 1.
Fig. 3 is a fragmentary view showing an electromagnet wiring-harness and an electromagnet wiring-harness retainer, taken in the direction of the arrow A in Fig. 1.
Fig. 4 is a bottom view showing the bottom end of the electromagnet wiring-harness and the electromagnet wiring-harness retainer, taken in the direction of the arrow B in Fig. 1.
Fig. 5 is a longitudinal cross-sectional view illustrating a first modification of an installation structure of an electromagnetic multiple-disk clutch device and also showing component parts located around the electromagnetic multiple-disk clutch device of the first modification.
Fig. 6 is a front view of the electromagnetic multiple-disk clutch device and component parts located around the electromagnetic multiple-disk clutch device of the first modification of Fig. 5.
Fig. 7 is a longitudinal cross-sectional view illustrating a second modification of an installation structure of an electromagnetic multiple-disk clutch device and also showing component parts located around the electromagnetic multiple-disk clutch device of the second modification.
Fig. 8 is a longitudinal cross-sectional view explaining the conventional installation/positioning structure of the electromagnetic multiple-disk clutch device.

### DESCRIPTION OF THE PREFERRED EMBODIMENTS

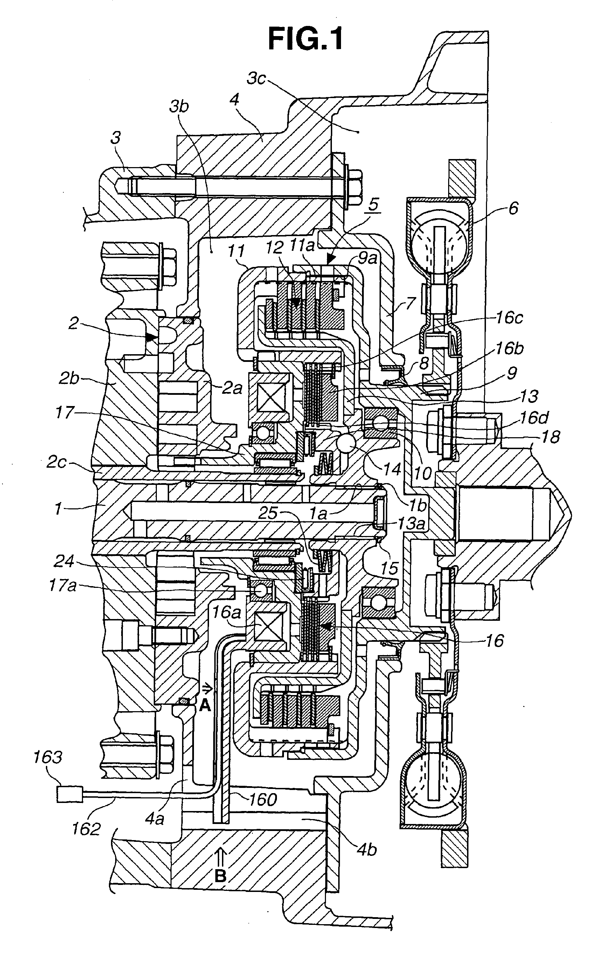

Referring now to the drawings, particularly to Fig. 1, the installation structure of an electromagnetic multiple-disk clutch device 5 of the embodiment is exemplified in an automatic transmission equipped vehicle employing a torsion-damper equipped torque converter. Herein, detailed explanations for the structure and operations of the speed-change gear mechanism of the automatic transmission will be omitted. In explaining the embodiment shown in Fig. 1, for the purpose of comparison between the conventional electromagnetic multiple-disk clutch device installation structure shown in Fig. 8 and the improved installation structure of the electromagnetic multiple-disk clutch device of the embodiment shown in Fig. 1, the same reference signs used to designate elements in the prior art shown in Fig. 8 will be applied to the corresponding elements used in the embodiment of Fig. 1.

As shown in Fig. 1, a converter housing 4, which serves as a stationary housing portion, is bolted and installed onto the front opening end of a transmission casing 3, that is, the right-hand transmission-casing opening end (viewing Fig. 1). A front cover 7 is bolted and installed on converter housing 4 so that the left-hand side wall surface of front cover 7 defines a first chamber 3b in conjunction with the inner peripheral wall of transmission casing 3 and a part of the inner peripheral wall of converter housing 4. First chamber 3b is provided for oil-lubrication of clutch device 5 therein. On the other hand, the right-hand sidewall surface of front cover 7 defines a second open chamber 3c in conjunction with a part of the inner peripheral wall of converter housing 4. Second chamber 3c accommodates therein a torsion damper 6. An oil pump 2 is disposed and interleaved between transmission casing 3 and converter housing 4. oil pump 2 is comprised of a pump housing 2a, a pump cover 2b, a stationary cylindrical-hollow sleeve 2c, and a ring gear pair. The ring gear pair is comprised of an outer-toothed small-diameter ring gear (i.e., a drive gear) and an inner-toothed large-diameter ring gear (i.e., a driven gear), both operably disposed in an internal space defined between pump housing 2a and pump cover 2b. The outer-toothed small-diameter ring gear and the inner-toothed large-diameter ring gear cooperate with each other to provide an internal gear pump. Stationary cylindrical-hollow sleeve 2c is fitted to the inner periphery of pump cover 2b. A transmission input shaft 1 is rotatably provided in the inner periphery of stationary cylindrical-hollow sleeve 2c. Electromagnetic multiple-disk clutch device 5 is mounted on the front end of transmission input shaft 1, so that an internal spline section (internal splines) 13a cut and formed in an input clutch hub 13 is spline-connected to an external spline section (external splines) 1a of the front end of transmission input shaft 1. Electromagnetic multiple-disk clutch device 5 of Fig. 1 is comprised of (i) an electromagnetic pilot clutch 16 having an electromagnet (or an electromagnet coil) 16a, an armature 16b, and a first alternating series of drive and driven plates, and (ii) a main multiple-disk clutch pack (or an input clutch pack) 12 comprised of first and second input clutch drums 9 and 11 and a second alternating series of drive and driven plates placed between first and second input clutch drums 9 and 11. As clearly shown in Fig. 1, an internal spline section (internal splines) 9a of first input clutch drum 9 is spline-connected to an external spline section (external splines) 11a of second input clutch drum 11, in such a manner as to define therebetween a second alternating drive and driven clutch plates accommodation space. An electromagnetic-clutch rotor 17, serving as a rotatable member, is fitted to the inner periphery of second input clutch drum 11 in such a manner as to permit rotary motion of rotor 17 together with second input clutch drum 11. Armature 16b also serves as one of drive plates 16c of the first alternating series of drive and driven clutch plates (16c, 16d) of electromagnetic pilot clutch 16. Drive plates 16c containing armature 16b are fitted and splined to second input clutch drum 11. A bearing 17a, such as a ball bearing, is interleaved between rotor 17 (the rotary member) and electromagnet 16a (the stationary member). That is to say, electromagnet 16a is installed on rotor 17 via bearing 17a, such that relative rotation of electromagnet 16a to rotor 17 is permitted. Driven plates 16d of the first alternating clutch-plate series (16c, 16d) of electromagnetic pilot clutch 16 are fitted and splined to a torque cam member 18. As described hereunder in detail, with electromagnetic multiple-disk clutch device 5 engaged, input rotation (torque) of second input clutch drum 11 is transmitted via the first alternating series of drive (16c) and driven (16d) plates of electromagnetic pilot clutch 16 to torque cam member 18. A loading cam 14 is provided between the right-hand sidewall of torque cam member 18 and input clutch hub 13 to produce an axial thrust (described later).

### [ACTION OF ELECTROMAGNETIC MULTIPLE-DISK CLUTCH DEVICE]

During operation of an engine (not shown) and with electromagnetic multiple-disk clutch device 5 deenergized, torque is transmitted from an engine crankshaft (not shown) through torsion damper 6, and first and second input clutch drums 9 and 11 to rotor 17, in that order. Under this condition, when an exciting current is applied to the electromagnet coil (electromagnet 16a) of electromagnetic pilot clutch 16, armature 16b is attracted by way of an electromagnetic force and as a result electromagnetic pilot clutch 16 is engaged. During operation of the engine, engine torque is input into loading cam 14, and thus an axially rightward thrust (viewing Fig. 1) is applied to clutch hub 13 by way of a cam action of loading cam 14 whose cam ball rolls on a cam-grooved, ramped surface of clutch hub 13. As a reaction force of the axially rightward thrust applied to clutch hub 13, an axially leftward thrust is applied to each of second input clutch drum 11, rotor 17, and electromagnet 16a via a thrust bearing 24. By way of application of the axially leftward reaction force (i.e., an axially-leftward thrust), second input clutch drum 11, rotor 17, and electromagnet 16a tend to move axially leftwards against the spring bias of a disc-shaped return spring 25. By virtue of the previously-noted two opposite axial thrusts, main multiple-disk clutch pack 12 of electromagnetic multiple-disk clutch device 5 can be engaged. With main multiple-disk clutch pack 12 engaged, input torque is transmitted from first input clutch drum 9 via the first alternating series of drive and driven plates to clutch hub 13, and then transmitted to transmission input shaft 1. That is to say, immediately when main multiple-disk clutch pack 12 has been engaged, engine torque input from torsion damper 6 to first input clutch drum 9 is transmitted through main multiple-disk clutch pack 12 directly to clutch hub 13, but not through electromagnetic pilot clutch 16, and then transmitted to transmission input shaft 1.

### [POSITIONING AND ROTARY-MOTION PREVENTION OF ELECTROMAGNET]

As best shown in Fig. 1, a long engaging member 160 is integrally connected to or integrally formed with an electromagnet-coil casing of electromagnet 16a. Engaging member 160 radially extends from the electromagnet-coil casing of electromagnet 16a, and additionally a radial length of the comparatively long, radially-extending engaging member 160 is dimensioned so that the outermost end of engaging member 160 is laid out adjacent to the inner peripheral wall surface of converter housing 4 and arranged considerably outside of the outermost portion of each of first and second input clutch drums 9 and 11 constructing a part of main multiple-disk clutch pack 12 of electromagnetic multiple-disk clutch device 5. A flexible electromagnet wiring harness 162 is electrically connected at one end to the electromagnet coil of electromagnet 16a.

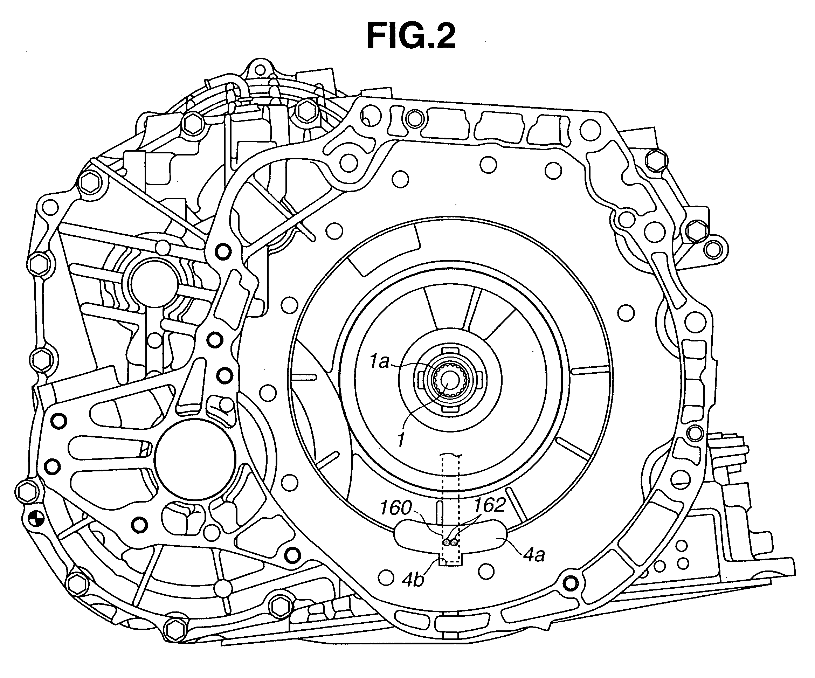

As can be seen from the longitudinal cross section shown in Fig. 1 and the front view shown in Fig. 2, converter housing 4 is formed at its bottom portion with a longitudinally-extending lubricating-oil drain hole (a longitudinally-extending communication hole) 4a and a longitudinally-extending keyway 4b. Lubricating-oil drain hole (communication hole) 4a intercommunicates the internal space of transmission casing 3 and the internal space of converter housing 4. Keyway 4b is machined and formed in the outermost portion (or the central portion of the lowermost end) of the inner periphery of lubricating-oil drain hole (communication hole) 4a, so that keyway 4b longitudinally extends parallel to the axis of transmission input shaft 1. As clearly shown in Fig. 1, keyway 4b laid outside of the outermost portion of the multiple-disk clutch pack (12). The installation structure of electromagnetic multiple-disk clutch device 5 of the embodiment shown in Fig. 1 includes the previously-noted radially-extending engaging member 160 and keyway 4b engaged with each other. As described later in more detail, when installing electromagnetic multiple-disk clutch device 5 on the speed-change gear mechanism of the automatic transmission, engaging member 160 of electromagnet 16a is axially pushed and forced against the speed-change gear mechanism, while fitting and engaging the outermost end of engaging member 160 with keyway 4b. In the installation structure of electromagnetic multiple-disk clutch device 5 of the embodiment shown in Fig. 1, the outermost end of engaging member 160, extending radially outwards from electromagnet 16a, is arranged considerably outside of the outermost portion of each of first and second input clutch drums 9 and 11 of electromagnetic multiple-disk clutch device 5. Precise angular phase-matching (proper fitting or precise radial alignment) between engaging member 160 and keyway 4b can be easily attained by way of visual observation from the opening end of converter housing 4, and thus positioning of electromagnet 16a with respect to the stationary housing portion (i.e., converter housing 4) is very easy. That is, keyway 4b, cut and machined in converter housing 4, serves as a reference position indicator (needed for accurate positioning of electromagnet 16a with respect to the stationary housing portion, i.e., converter housing 4, by way of visual observation, in other words, needed for indicating a reference angular position of electromagnet 16a relative to converter housing 4) as well as an engaging-member retainer by which engaging member 160 is certainly retained and thus rotary motion of electromagnet 16a is prevented. As can be appreciated from the above, under a condition where assembling of electromagnetic multiple-disk clutch device 5 on the speed-change gear mechanism of the automatic transmission has been already completed, engaging member 160 of electromagnet 16a has been accurately fitted to and engaged with keyway 4b. After assembling of electromagnetic multiple-disk clutch device 5, it is possible to certainly prevent rotary motion of electromagnet 16a installed on rotor 17 via bearing 17a.

### [WIRING OF HARNESS OF ELECTROMAGNET]

As described previously, flexible wiring harness 162 is electrically connected at one end to the electromagnet coil of electromagnet 16a. The other end of wiring harness 162 is wired and carried out from the interior space of . converter housing 4 through lubricating-oil drain hole 4a into the interior space of transmission casing 3. The other end of wiring harness 162 is electrically connected via a wiring-harness connector 163 directly to a control valve assembly (not shown) located at the bottom of transmission casing 3. On later-model automatic transmissions, there is an increased tendency for wire harnesses (or lead wires) of a plurality of sensors and switches to be collected as a wiring-harness assembly, and there is a tendency for the wiring-harness assembly to be simply electrically connected via a single wiring-harness connector to another electronic control unit. Utilizing lubricating-oil drain hole 4a to carry out the other end of wiring harness 162 from converter housing 4 into transmission casing 3 contributes to centralization of wiring harnesses.

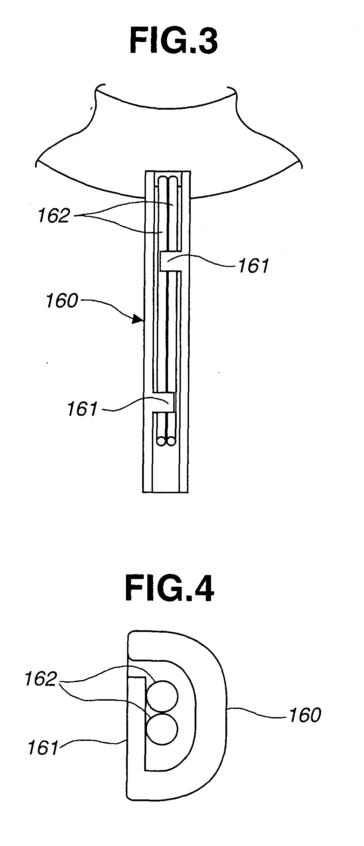

As can be seen from the electromagnet wiring harness layout shown in Figs. 3 and 4, engaging member 160 is formed integral with wiring-harness retainers 161, 161. Lead wires of electromagnet wiring harness 162 are suitably reliably retained or held inside of and along engaging member 160 having a substantially C-shaped lateral cross section, by means of wiring-harness retainers 161, 161 integrally formed with engaging member 160. Retaining the lead wires of electromagnet wiring harness 162 inside of engaging member 160 having the substantially C-shaped lateral cross section by wiring-harness retainers 161, 161, and arranging the lead wires of electromagnet wiring harness 162 along the radially-extending engaging member 160 can effectively prevent undesirable loosening of wiring harness 162 and also avoid undesirable contact between electromagnet wiring harness 162 and second input clutch drum 11. That is, wiring-harness retainers 161, 161 formed integral with engaging member 160 contribute to easy and reliable positioning of wiring harness 162.

Hitherto, the conventional electromagnetic multiple-disk clutch device installation structure required an additional machining process for electromagnet wiring-harness takeout hole 100 and an additional oil seal 101 used to prevent oil leakage from the electromagnet wiring-harness takeout hole to the exterior space (see Fig. 8). On the contrary, according to the installation structure of electromagnetic multiple-disk clutch device 5 of the embodiment shown in Figs. 1-4, electromagnet wiring harness 162 can be wired, routed and taken out from the interior space of converter housing 4 through the existing lubricating-oil drain hole (communication hole) 4a into the interior space of transmission casing 3. Additionally, the carried-out end of electromagnet wiring harness 162 is electrically connected via wiring-harness connector 162 directly to the control valve assembly (not shown) located at the bottom of transmission casing 3. The improved electromagnet wiring harness layout of electromagnetic multiple-disk clutch device 5 of the embodiment eliminates the additional machining process for the electromagnet wiring-harness takeout hole and also eliminates the necessity of the additional oil seal used to prevent oil leakage from the electromagnet wiring-harness takeout hole. That is, the electromagnet wiring harness layout of electromagnetic multiple-disk clutch device 5 of the embodiment contributes to reduced machining processes and reduced number of component parts.

### [ASSEMBLING OF ELECTROMAGNETIC MULTIPLE-DISK CLUTCH DEVICE ON SPEED-CHANGE GEAR MECHANISM]

Hereunder described in detail is a concrete method for assembling and installing electromagnetic multiple-disk clutch device 5 on the speed-change gear mechanism of the automatic transmission. As can be seen from the longitudinal cross section of Fig. 1, under a specific condition where transmission input shaft 1 has been already installed on the speed-change gear mechanism, electromagnetic multiple-disk clutch device 5 is axially pushed and forced against the speed-change gear mechanism, while fitting and engaging the outermost end of engaging member 160 with keyway 4b cut and machined in converter housing 4 and simultaneously spline-connecting external spline section (external splines) 1a of the protruded end of transmission input shaft 1 to internal spline section (internal splines) 13a of input clutch hub 13. At this time, input clutch hub 13 of electromagnetic multiple-disk clutch device 5 must be pushed axially leftwards and forced against the front end of the speed-change gear mechanism, until a snap-ring groove 1b, cut and machined in the outer periphery of the right-hand end of external spline section 1a of transmission input shaft 1, comes out of the central bore of input clutch hub 13 and thus a specified relative-position relationship between snap-ring groove 1b of the right-hand end of transmission input shaft 1 and the right-hand side wall of input clutch hub 13 is achieved so as to permit fitting of a C-shaped retaining ring or a C-shaped snap ring 15 to snap-ring groove 1b.

When assembling electromagnetic multiple-disk clutch device 5 on the speed-change gear mechanism, wiring harness 162 of electromagnet 16a and wiring-harness connector 163 have to be carried out from the interior space of converter housing 4 through lubricating-oil drain hole (communication hole) 4a into the interior space of transmission casing 3 of the transmission unit, in advance.

After the specified relative-position relationship between snap-ring groove 1b of the right-hand end of transmission input shaft 1 and the right-hand side wall of input clutch hub 13 has been achieved, C-shaped snap ring 15 is fitted to snap-ring groove 1b and thus electromagnetic multiple-disk clutch device 5, exactly input clutch hub 13 of the multiple-disk clutch device, is retained and fixedly connected to the protruded end of transmission input shaft 1.

Thereafter, internal spline section (internal splines) 9a of first input clutch drum 9 is spline-connected to external spline section (external splines) 11a of second input clutch drum 11. On the other hand, a bearing 10, which should be disposed between first input clutch drum 9 and input clutch hub 13, is press-fitted to the inner periphery of first input clutch drum 9, in advance.

Finally, front cover 7 is bolted and installed on converter housing 4. On the other hand, an oil seal 8 is press-fitted to the inner periphery of the central bore of front cover 7, in advance. By bolting and installing front cover 7 to converter housing 4, the internal space of converter housing 4 can be divided into first and second chambers 3b and 3c, and at the same time electromagnetic multiple-disk clutch device 5 and the right-hand end of keyway 4b are hermetically covered by means of front cover 7 so as to prevent oil leakage from first chamber 3b through keyway 4b to second chamber 3c.

Next, wiring of electromagnet wiring harness 162 and connection of wiring-harness connector 163 (a female connector) to an electromagnet wiring-harness connector (a male connector) of the control valve assembly (not shown) are performed. Under a specific condition where the transmission unit, which includes the speed-change gear mechanism and transmission casing 3, is inverted, and additionally an oil pan (not shown) is removed from the bottom of the transmission unit, wiring-harness connector 163 (female connector) of electromagnet wiring harness 162 is connected to the electromagnet wiring-harness connector (male connector) of the control valve assembly (not shown) located at the bottom of transmission casing 3. Thereafter, the oil pan is installed on the bottom of transmission casing 3 of the transmission unit. In this manner, a series of assembling procedures of electromagnetic multiple-disk clutch device 5 on the speed-change gear assembly of the automatic transmission are completed.

As set forth above, according to the installation structure of electromagnetic multiple-disk clutch device 5 of the embodiment shown in Figs. 1-4, it is possible to simultaneously achieve both of easy and accurate positioning of electromagnet 16a with respect to the stationary housing portion (i.e., converter housing 4) and prevention of rotary motion of electromagnet 16a by fitting engaging member 160 integrally formed with the electromagnet-coil casing to keyway 4b formed in the stationary housing portion (i.e., converter housing 4).

Furthermore, according to the installation structure of electromagnetic multiple-disk clutch device 5 of the embodiment shown in Figs. 1-4, engaging member 160 radially extends from the electromagnet-coil casing of electromagnet 16a, and additionally the outermost end of the radially-extending engaging member 160 is arranged radially outside of the outermost portion of each of at least two input clutch drums 9 and 11. Thus, when assembling electromagnetic multiple-disk clutch device 5 on the speed-change gear mechanism, it is possible to easily check up on angular phase matching (or radial alignment) between the comparatively long engaging member 160 and keyway 4b (serving as a reference position indicator as well as an engaging-member retainer) by way of visual observation in the assembling direction. This ensures more accurate and easy positioning and high-precision assembling of electromagnet 16a with respect to the stationary housing portion (converter housing 4), thus insuring stable and enhanced performance of electromagnetic multiple-disk clutch device 5.

Additionally, the lead wires of wiring harness 162 of electromagnet 16a are certainly reliably retained by means of wiring-harness retainers 161, 161 integrally formed with engaging member 160, thus effectively preventing undesirable loosening of electromagnet wiring harness 162 and simultaneously enabling reliable positioning of electromagnet wiring harness 162. In other words, the radially-extending engaging member 160 formed integral with wiring-harness retainers 161, 161, also serves as a wiring-harness holder that extends outwards from the electromagnet-coil casing in the same radial direction as the wiring direction of electromagnet wiring harness (162) of the electromagnet (16a) for reliably holding electromagnet wiring harness (162). Thus, it is possible to certainly avoid undesirable contact between electromagnet wiring harness 162 and second input clutch drum 11 into which engine torque is input. As a result, it is possible to certainly prevent undesirable breakage of the lead wires of electromagnet wiring harness 162.

As discussed previously, the radially-extending, elongated engaging member 160, cooperating with keyway 4b, can simultaneously easily play several roles, that is, (i) prevention of rotary motion of electromagnet 16a, (ii) accurate and easy positioning of electromagnet 16a with respect to the stationary housing portion, and (iii) avoidance of breakage of electromagnet wiring harness 162 as a result of prevention of loosening of electromagnet wiring harness 162 and easy and reliable positioning of electromagnet wiring harness 162.

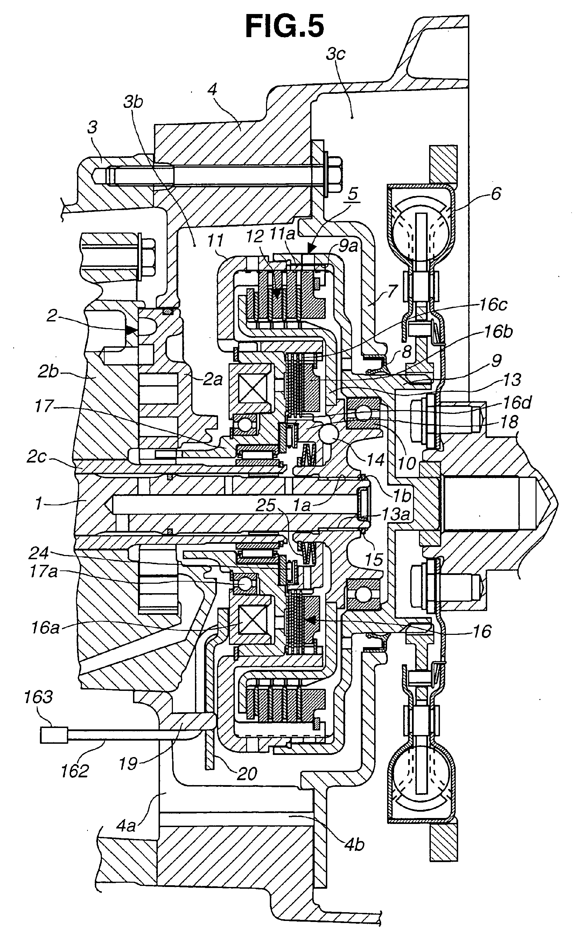

Referring now to Fig. 5, there is shown the first modified installation structure of electromagnetic multiple-disk clutch device 5. The electromagnetic multiple-disk clutch device installation structure of the first modification shown in Fig. 5 is slightly different from that of the embodiment shown in Figs. 1-4, in that keyway 4b merely serves as a reference position indicator (a reference position indication groove) needed for accurate positioning of electromagnet 16a with respect to converter housing 4 by way of visual observation, and additionally an engaging-member retainer 19 is provided radially inside of the outermost portion of each of first and second input clutch drums 9 and 11 constructing a part of main multiple-disk clutch pack 12 of electromagnetic multiple-disk clutch device 5, and additionally the outermost end of the comparatively short, radially-extending, rod-shaped engaging member 20 is laid out away from the inner peripheral wall surface of converter housing 4 but arranged slightly outside of the outermost portion of each of first and second input clutch drums 9 and 11.

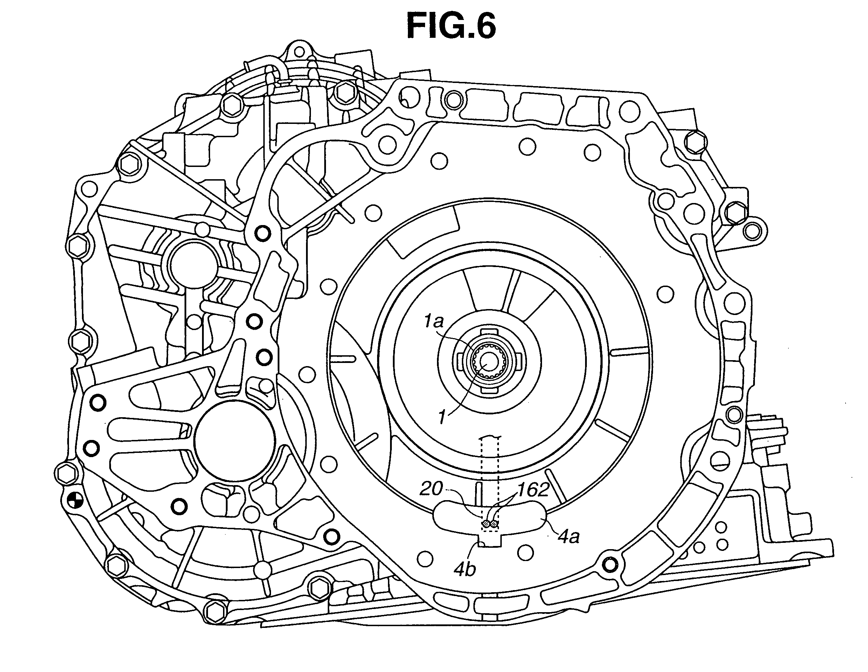

As can be seen from the longitudinal cross section shown in Fig. 5 and the front view shown in Fig. 6, in the installation structure of electromagnetic multiple-disk clutch device 5 of the first modification, for accurate positioning of electromagnet 16a with respect to the stationary housing portion (converter housing 4), precise angular phase matching or precise radial alignment between the comparatively short, radially-extending, rod-shaped engaging member 20 and keyway 4b can be checked or adjusted by way of visual observation, since the radial length of rod-shaped engaging member 20 of the first modification of Figs. 5-6 is relatively shorter than that of engaging member 160 of the embodiment of Figs. 1-4 but the outermost end of the rod-shaped engaging member 20 is arranged slightly outside of the outermost portion of each of first and second input clutch drums 9 and 11. In the first modification, the innermost end of the comparatively short, radially-extending, rod-shaped engaging member 20 is integrally fixedly connected to the electromagnet-coil casing of electromagnet 16a. Also, the comparatively short, radially-extending, rod-shaped engaging member 20 is engaged with and retained by engaging-member retainer 19 so as to prevent rotary motion of electromagnet 16a relative to the stationary housing portion (i.e., converter housing 4).

As discussed above, in the installation structure of electromagnetic multiple-disk clutch device 5 of the first modification of Figs. 5-6, the outermost end of the comparatively short, radially-extending, rod-shaped engaging member 20 is laid out away from the inner peripheral wall surface of converter housing 4 but arranged slightly outside of the outermost portion of each of at least first and second input clutch drums 9 and 11. Thus, when assembling electromagnetic multiple-disk clutch device 5 on the speed-change gear mechanism, it is possible to easily check up on angular phase matching (or radial alignment) between the comparatively short engaging member 20 and keyway 4b (serving as only a reference position indicator) by way of visual observation in the assembling direction. This ensures more accurate and easy positioning and high-precision assembling of electromagnet 16a with respect to the stationary housing portion (converter housing 4), thus insuring stable and enhanced performance of electromagnetic multiple-disk clutch device 5.

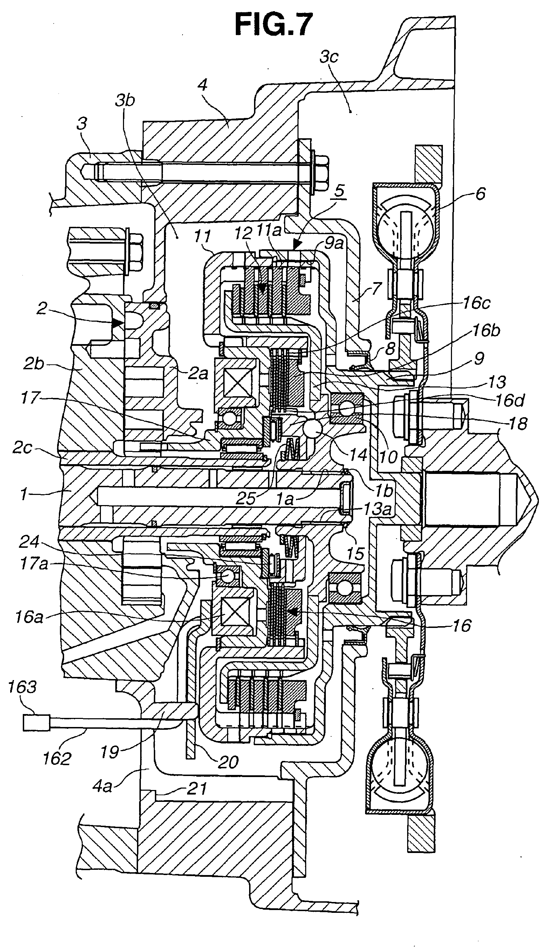

Referring now to Fig. 7, there is shown the second modified installation structure of electromagnetic multiple-disk clutch device 5. The electromagnetic multiple-disk clutch device installation structure of the second modification shown in Fig. 7 is slightly different from that of the first modification shown in Figs. 5-6, in that keyway 4b (serving as a reference position indication groove) is eliminated and in lieu thereof a ridged reference-position marker 21 is formed on the inner periphery of lubricating-oil drain hole (communication hole) 4a of converter housing 4. Ridged reference-position marker 21 serves as a reference position indicator or a reference position marking needed to attain accurate positioning of electromagnet 16a with respect to the stationary housing portion, i.e., converter housing 4, by adjusting precise angular-phase matching or precise radial alignment between the outermost end of the comparatively short, radially-extending, rod-shaped engaging member 20 and ridged reference-position marker 21 by way of visual observation in the assembling direction. In the second modification of Fig. 7, ridged reference-position marker 21 is integrally formed on the inner periphery of converter housing 4 by way of molding or die-casting. Regardless of the limited space defined in converter housing 4 and the limited thickness of converter housing 4, such a ridged reference-position marker 21 is small in size, and thus ridged reference-position marker 21 can be easily formed on the inner periphery of converter housing 4.

As can be seen from the longitudinal cross section shown in Fig. 7, in the installation structure of electromagnetic multiple-disk clutch device 5 of the second modification, for accurate positioning of electromagnet 16a with respect to the stationary housing portion (converter housing 4), precise angular phase matching or precise radial alignment between the comparatively short, radially-extending, rod-shaped engaging member 20 and ridged reference-position marker 21 can be checked or adjusted by way of visual observation, since the outermost end of the rod-shaped engaging member 20 is arranged slightly outside of the outermost portion of each of first and second input clutch drums 9 and 11. In the same manner as the first modification of Figs. 5-6, in the electromagnetic multiple-disk clutch device installation structure of the second modification of Fig. 7, the comparatively short, radially-extending, rod-shaped engaging member 20 is engaged with and retained by engaging-member retainer 19 so as to prevent rotary motion of electromagnet 16a relative to the stationary housing portion (i.e., converter housing 4). As discussed above, when assembling electromagnetic multiple-disk clutch device 5 on the speed-change gear mechanism, it is possible to easily check up on angular phase matching (or radial alignment) between the comparatively short engaging member 20 and ridged reference-position marker 21 by way of visual observation in the assembling direction. This ensures more accurate and easy positioning and high-precision assembling of electromagnet 16a with respect to the stationary housing portion (converter housing 4), thus insuring stable and enhanced performance of electromagnetic multiple-disk clutch device 5.

The entire contents of Japanese Patent Application No. 2003-367030 (filed October 28, 2003) are incorporated herein by reference.

While the foregoing is a description of the preferred embodiments carried out the invention, it will be understood that the invention is not limited to the particular embodiments shown and described herein, but that various changes and modifications may be made without departing from the scope or spirit of this invention as defined by the following claims.

## Claims

1. An installation structure of an electromagnetic multiple-disk clutch device (5) having an electromagnet (16a) and a multiple-disk clutch pack (12) having drive and driven plates and arranged radially outside of the electromagnet (16a), the structure comprising:
a stationary housing portion (4) accommodating therein the electromagnetic multiple-disk clutch device (5);
an engaging member (160; 20) attached to an electromagnet-coil casing of the electromagnet (16a), the engaging member (160; 20) extending radially outwards from the electromagnet-coil casing, and the engaging member (160; 20) having a radial length that an outermost end of the engaging member (160) is laid outside of an outermost portion of the multiple-disk clutch pack (12); and
an engaging-member retainer (4b; 19) formed in the stationary housing portion (4) and brought into engagement with the engaging member (160; 20) when assembling the electromagnetic multiple-disk clutch device (5), for preventing rotary motion of the electromagnet (16a) and for positioning the electromagnet (16a) with respect to the stationary housing portion (4).

2. The installation structure of the electromagnetic multiple-disk clutch device (5) as claimed in claim 1, wherein:
the outermost end of the engaging member (160), laid outside of the outermost portion of the multiple-disk clutch pack (12), is located adjacent to an inner periphery of the stationary housing portion (4); and
the engaging-member retainer comprises a keyway (4b) formed in the stationary housing portion (4) and brought into engagement with the engaging member (160) when assembling the electromagnetic multiple-disk clutch device (5), and the keyway (4b) laid outside of the outermost portion of the multiple-disk clutch pack (12) and having a reference position indicator function needed for indicating a reference angular position of the electromagnet (16a).

3. The installation structure of the electromagnetic multiple-disk clutch device (5) as claimed in claim 1, further comprising:
a reference position indicator (4b, 21) formed in the stationary housing portion (4) and laid outside of the outermost portion of the multiple-disk clutch pack (12) and having a reference position indicator function needed for indicating a reference angular position of the electromagnet (16a) .

4. The installation structure of the electromagnetic multiple-disk clutch device (5) as claimed in claim 3, wherein:
the outermost end of the engaging member (20), laid outside of the outermost portion of the multiple-disk clutch pack (12), is located away from an inner periphery of the stationary housing portion (4);
the engaging-member retainer (19) is provided radially inside of the outermost portion of the multiple-disk clutch pack (12); and
radial alignment between the outermost end of the engaging member (20) and the reference position indicator (4b, 21) is adjusted for positioning of the electromagnet (16a) with respect to the stationary housing portion (4) and for simultaneously bringing the engaging-member retainer (19) into engagement with the engaging member (20).

5. The installation structure of the electromagnetic multiple-disk clutch device (5) as claimed in claim 3, wherein:
the reference position indicator comprises a keyway (4b) formed in the stationary housing portion (4) and brought into engagement with the engaging member (160) when assembling the electromagnetic multiple-disk clutch device (5), and the keyway (4b) laid outside of the outermost portion of the multiple-disk clutch pack (12).

6. The installation structure of the electromagnetic multiple-disk clutch device (5) as claimed in claim 3, wherein:
the reference position indicator comprises a ridged reference-position marker (21) formed on an inner periphery of the stationary housing portion (4) and laid outside of the outermost portion of the multiple-disk clutch pack (12).

7. The installation structure of the electromagnetic multiple-disk clutch device (5) as claimed in any one of preceding claims, wherein:
the engaging member (160; 20) extends outwards from the electromagnet-coil casing in the same radial direction as a wiring direction of an electromagnet wiring harness (162) of the electromagnet (16a) for holding the electromagnet wiring harness (162).

8. The installation structure of the electromagnetic multiple-disk clutch device (5) as claimed in claim 7, wherein:
the engaging member (160; 20) has at least one wiring-harness retainer (161) integrally formed with the engaging member (160; 20) for retaining and wiring the electromagnet wiring harness (162) along the engaging member (160; 20).

9. The installation structure of the electromagnetic multiple-disk clutch device (5) as claimed in any one of preceding claims, wherein:
the stationary housing portion comprises a converter housing (4) located adjacent to a transmission casing (3).

10. The installation structure of the electromagnetic multiple-disk clutch device (5) as claimed in claim 9, wherein:
the converter housing (4) has a communication hole (4a) formed therein and intercommunicating an internal space defined in the transmission casing (3) and an internal space defined in the converter housing (4); and
the electromagnet wiring harness (162) is wired from the internal space of the converter housing (4) through the communication hole (4a) into the internal space of the transmission casing (3).
